# EUROPÄISCHE PATENTSCHRIFT

(11) **EP 0 930 455 B1**
(45) Veröffentlichungstag und Bekanntmachung des Hinweises auf die Patenterteilung: **09.07.2003**
(21) Anmeldenummer: 98123689.6
(22) Anmeldetag: 12.12.1998
(51) Int. Cl.: F16L 41/00, F16L 27/04, E03C 1/12

(54) **Kugelgelenk-Sattelstück**
Saddle-piece with ball joint
Selle avec articulation à rotule

(30) Priorität: 14.01.1998 DE 29800496 U
(43) Veröffentlichungstag der Anmeldung: 21.07.1999
(73) Patentinhaber: Funke Kunststoffe GmbH, 48324 Sendenhorst (DE)
(72) Erfinder: Funke, Norbert, 48324 Sendenhorst (DE); Funke, Hans Günter, 48324 Sendenhorst (DE)
(74) Vertreter: Hoffmeister, Helmut, Dr. Dipl.-Phys.

(56) Entgegenhaltungen:
- FR-A- 1 226 904
- FR-A- 2 305 676
- US-A- 3 404 904
- US-A- 4 917 408

## Beschreibung

Die Erfindung betrifft eine Vorrichtung zum flüssigkeitsdichten Verbinden eines Anschlußrohrs mit einem Kanalrohr in einem stufenlos einzunehmenden Winkel, die besteht aus
- einem Hohlkugelstumpf-Anschlußkörper, der über einer Öffnung eines Kanalrohrs anzuordnen ist, und
- einem Anschlußstutzen, der in dem Hohlkugelstumpf-Anschlußkörper winkelverstellbar angeordnet ist.

Aus dem DE-Prospekt: Das FABEKUN-Kugelgelenk für spannungsfreie Hausanschlüsse, S. 1 bis 3, ist ein Drehmechanismus bekannt, der veränderliche Winkel zuläßt und ein Anschließen eines Rohres an einem Hauptkanal zuläßt. Ähnliche Anschlüße sind aus der FR-A- 2 305 676 und der US-A- 4 917 408 bekannt.

Nachteilig ist, daß ein Hohlkugelstumpfkörper mit einem umlaufenden Scheibenring auf einer Außenfläche eines Hauptkanalrohrs zu befestigen ist. Kommt als Hauptkanalrohr ein Inlinerrohr zum Einsatz, das aus einem Kunststoffinnenrohr besteht, das von einem Betonrohr umgeben ist, muß das Betonrohr im Bereich einer einzubringenden Öffnung großflächig entfernt werden, damit der Scheibenring auf dem Kunststoffinnenrohr aufgeklebt werden kann. Anschließend muß der fehlende Mantel des Betonrohres wieder hergestellt werden. Diese aufwendigen Arbeiten erfordern eine hohe Präzision, damit das Kunststoffinnenrohr nicht beschädigt wird. Außerdem ist das Kugelgelenk aufwendig in seiner Herstellung.

Aus der EP-A-603 775 ist ein Verfahren zum dichtschließenden Verbinden eines Kanalrohrs mit einem Sattelstück und ein verspannbares Sattelstück hierfür bekannt. Hierbei wird das Sattelstück mit einer Dichtungshaltekammer voran, in die eine Ringdichtung eingelegt worden ist, in eine Öffnung des Kanalrohrs geschoben, bis eine eingestüpte Dichtungslippe der Rindichtung im Inneren des Kanalrohrs freigegeben wird. Anschließend wird das Sattelstück nach oben gezogen, so daß die Dichtungslippe den Spalt zwischen Dichtungshaltekammer und Innenfläche Kanarohr verschließt. Mit Hilfe eines einzubringenden Kunststoffschaums wird der Abzweigstutzen fest in der Öffnung gehalten.

Diese Art des dichtschließenden Verbindens hat sich bewährt. Allerdings muß der einmal gewählte Winkel zwischen Sattelstück und Kanalrohr auch tatsächlich eingehalten werden. Andere Winkel sind nur noch mit hohen Aufwendungen zu realisieren.

Aus der CH-B-66 074 ist ein Röhrenschloß zur Verbindung von Seitensträngen mit Sammelsträngen bekannt. Das Röhrenschloß besteht aus einem in die Sammelleitung einzuschaltenden Rohrstück, das mit einem nach außen erweiterten und ausgebauchten Anschlußstutzen versehen ist. In dem Anschlußstutzen ist ein Zweigleitungsstück mit einer kugelförmigen Wulst angeordnet.

Nachteilig ist, daß das vorgefertigte Röhrenschloß bei einem Inlinerrohr aus Kunststoff gefertigt, aus dem bereits verlegten Kanalrohr für einen Hausanschluß an dieser Stelle ein Stück in der Länge des Rohrstücks heraus zu schneiden ist. Anschließend muß das Rohrstück mit dem Inliner-Kunststoffrohr verschweist und danach um das Rohrstück und dem ausgebauchten Anschlußstück wenigstens teilweise der fehlende Mantel des Inliner-Betonrohrs ergänzt werden. Diese sehr aufwendigen Arbeiten müssen in dem ausgehobenen Kanalgraben vorgenommen werden.

Es stellt sich deshalb die Aufgabe, eine Vorrichtung zum flüssigkeitsdichten Verbinden eines Anschlußrohrs mit einem Kanalrohr in einem stufenlos einzunehmenden Winkel zu schaffen, die sich einfach und leicht herstellen und montieren läßt.

Erfindungsgemäß wird diese Aufgabe durch die Merkmale des Anspruchs 1 gelöst.

Die mit der Erfindung erzielten Vorteile bestehen insbesondere darin, daß die Vorteile des Sattelstücks und des Anschlußschwenkstutzens gemäß dem Stand der Technik miteinander kombiniert werden. Das Sattelstück kann an jeder Stelle des Kanalrohrs installiert werden. Es erlaubt ein einfaches, genaues und vor allen Dingen flüssigkeitsdichtes Verbinden der gesamten Vorrichtung mit dem Kanalrohr. Der eingebaute Schwenkstutzen hingegen gewährleistet ein frei bewegliches Hinschwenken in einem stufenlos einzunehmenden Winkel in Richtung Hausanschlußrohr. Spannungen, die vom Hausanschlußrohr auf die Verbindung übertragen werden können, werden wirksam vermieden.

Zwischen Sattelstück und Anschlußstutzen kann eine Dichtungsmaschette angeordnet sein. Diese Dichtungsmanschette überbrückt den veränderlichen Spalt zwischen Anschlußstutzen und Sattelstück und schützt ihn, so daß das Verschwenken um den gewünschten Winkel nicht anschließend durch hereinfallendes Erdreich und dergleichen zunichte gemacht wird.

Für die Anordnung der Kopfdichtungshaltekammer gibt es zwei Möglichkeiten.

Zum einen kann sie auf einem Kugeläquator des Kugelringkörpers angeordnet sein.

Andererseits kann sich jeweils eine Kopfdichtungshaltekammer jeweils zu einer Seite des Kugeläquators befinden. Hierdurch entsteht eine doppelte Abdichtung. Unter Kugeläquator wird dabei die höchste umlaufende Ringfläche des Kugelringkörpers verstanden. Unter dem Begriff Kugelringkörper soll eine Hohlkugel verstanden werden, die auf wenigstens der zum Anschlußschwenkstutzen hin zeigenden Seite abgeplattet ist. Ist die Hohlkugel zu beiden Seiten abgeschnitten, steht ein gewölbter Ring zur Verfügung. Hierdurch bildet der bewegliche Kugelringkörper ein nach allen Richtungen frei beweglichen Kugelgelenks heraus, das sich einfach zusammenstecken läßt.

Die Kugelstumpfringdichtung kann einen runden, ovalen, halbrunden und/oder halbovalen Querschnitt haben. Wesentlich ist dabei, daß die gekrümmte Fläche in Richtung des Innen-Hohlkugelstumpfeinsatzkörpers zeigt, so daß sich die abdichtende Wirkung der Dichtung voll entfalten kann. Die Rundung der Dichtung erlaubt ein müheloses Verschwenken bei gleichzeitiger abdichtender Wirkung.

Um das Sattelstück und auf eine Außenfläche des Kanalrohrs kann ein Auflagering gelegt werden, der gemeinsam mit der einer Verspanneinrichtung die Ringdichtung verspannen kann. Hierdurch ist ein sicherer und vor allen Dingen haltbarer Sitz der Ringdichtung gewährleistet.

An dem Sattelstück kann ein Kunststoffschaum in einen durch das Sattelstück und die Öffnung gebildeten Raum so eingebracht werden kann, daß nach dessen Aushärtung in dem Raum ein Schaumstoffdichtungs- und -halterungselement positioniert ist. Dieses Element sorgt zum einen für eine wirksame feuchtigkeitsdichte Verbindung an dieser Stelle und zum anderen für ein verrüttelungsfestes Verbinden des Kugelgelenk-Sattelstücks in der Öffnung des Kanalrohrs.

Der Kuststoff kann ein Polyurethanschaum sein. Es sind aber auch andere nicht genannte Kunststoffschäume einsetzbar.

Der Innen-Hohlkugelstumpf- und der Kugelringkörper können aus Kunststoff und/oder Metall hergestellt sein. Insbesondere die Verwendung von Kunststoff verleiht dem entstehenden Kugelgelenk schmierähnliche Eigenschaften.

Ein Ausführungsbeispiel der Erfindung ist in der Zeichnung dargestellt und wird im folgenden näher beschrieben. Es zeigen
- Fig. 1: ein Einschieben eines Kugelgelenk-Sattelstücks in ein Kanalrohr zum dichtschließenden Verbinden zwischen ihnen in einer schematischen, geschnittenen Darstellung,
- Fig. 2: ein Kugelgelenk-Sattelstück gemäß Fig. 1 in einer vergrößerten, schematischen, geschnitten Darstellung,
- Fig. 3: ein Kugelgelenk-Sattelstück gemäß Fig. 1 und 2 in einer schematischen, perspektivischen, teilgeschnittenen Darstellung,
- Fig. 4: einen Kugelringkörper eines Kugelgelenk-Sattelstücks gemäß den Fig. 1 - 3,
- Fig. 5: ein Einsetzen eines Kugelringkörpers gemäß Fig. 4 in einen Innen-Hohlkugelstumpfkörper eines Kugelgelenk-Sattelstücks gemäß Fig. 1 - 3 in einer schematischen, geschnittenen Darstellung, und
- Fig. 6: ein Einsetzen eines Kugelringkörpers gemäß Fig. 4 in einen Innen-Hohlkugelstumpfkörper eines Kugelgelenk-Sattelstücks gemäß Fig. 1 - 3 in einer schematischen, perspektivischen Darstellung.

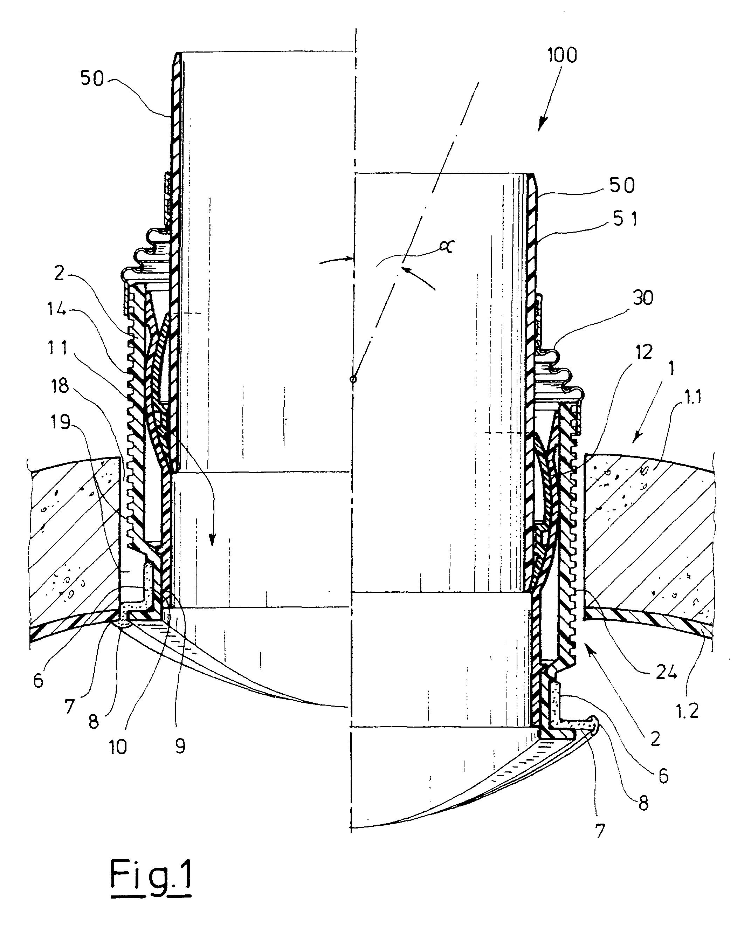

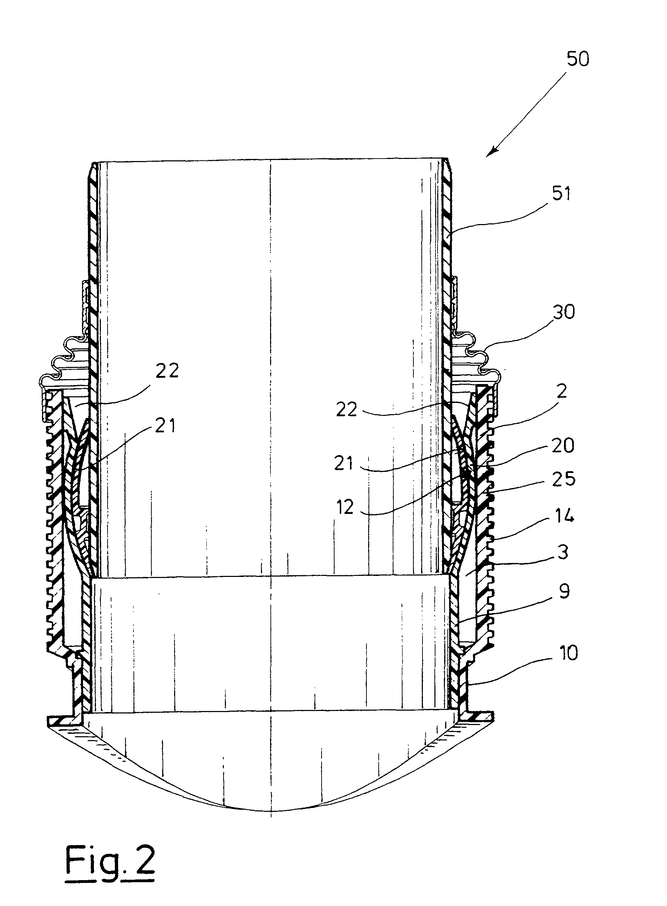

Wie die Fig. 1 und 2 zeigen, besteht ein Kugelgelenk-Sattelstück 100 aus
- einem Anschlußstutzen 2 und
- einem Anschlußschwenkstutzen 50, der in dem Anschlußstutzen 2 angeordnet ist.

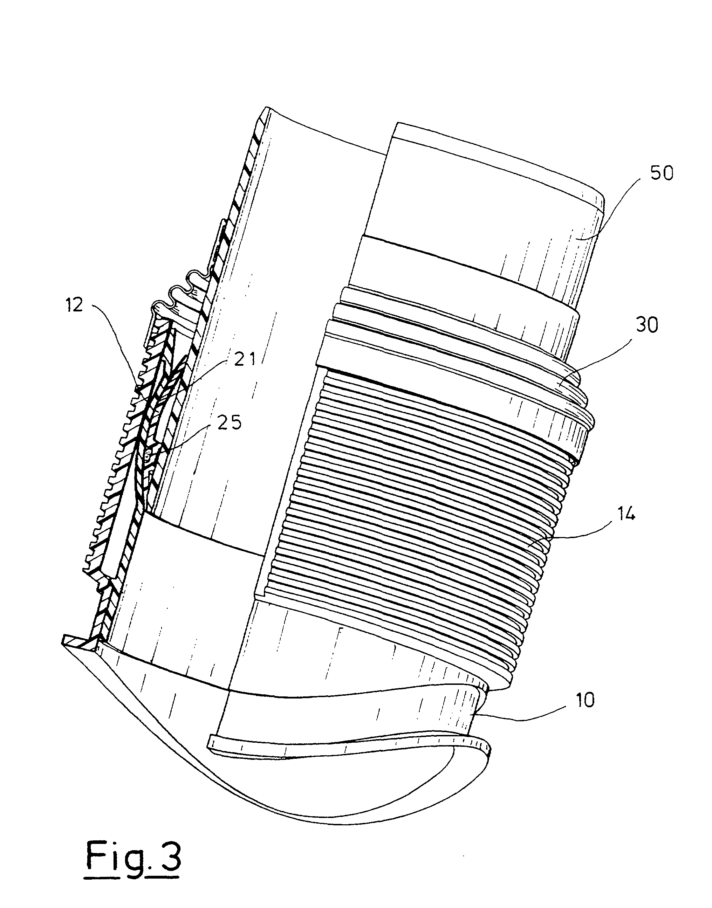

Fig. 3 zeigt das Kugelgelenk-Sattelstück 100 in einer perspektivischen Datellung.

Der Anschlußstutzen 2 besteht aus einem Außenrohr 25, das sich über eine Stufe erweitert. In dem Außenrohr 25 ist ein Innenrohr 9 derart angeordnet, daß zwischen beiden ein Hohlraum 3 entsteht. Das Außenrohr 25 wird durch eine U-förmige Haltekammer 10 abgeschlossen, auf die das Innenrohr 9 geführt ist. In der Dichtungshaltekammer 10 (vgl. Fig. 1) ist eine Ringdichtung 6 angeordnet, die über eine Dichtungslippe 7 verfügt, die an ihrer Spitze mit einer Verdickung 8 endet. Auf der Außenseite des Außenrohrs 25 (vgl. Fig. 2 und 3) ist wenigstens teilweise ein Außengewinde 14 angeordnet. Im Inneren des Anschlußstutzens 2 ist, an das Außenrohr 25 wenigstens teilweise herangeführt, und über dem Innenrohr 9, ein Innen- Hohlkegelstumpfkörper 20 angeordnet. Der Innen-Hohlkugelstumpfkörper 20 stellt eine Hohlkugel dar, die an beiden Äquatorseiten abgeplattet ist und die über einen Außenzylindermantel verfügt, mit dem sie, wie Fig. 2 zeigt, einteilig an das Innenrohr 9 angeformt ist. Der Zylinderfläche des Außenrohrs 25 liegt eine Innenkugelfläche 21 gegenüber. Zur Öffnung hin ist die Innenkugelfläche 21 mit einer Anschlagkeilfläche 22 verbunden. Diese Anschlagkeilfläche 22 kann durch einen Vollkörper unterfüttert werden, so daß sich die zylindrische Außenfläche des Innen-Hohlkugelstumpfkörpers 20 hier gerade fortsetzt.

Der Anschlußschwenkstutzen 50 (vgl. Fig. 2 und 3) besteht aus einem Anschlußhohlkörper 51, der in einen Kugelringkörper 53 eingesetzt ist. Bei dem Kugelringkörper 53 handelt es sich ebenfalls um eine Hohlkugel, die über einen Kugeläquator 57 größten Durchmessers verfügt und zu beiden Seiten abgeschnitten ist. Lassen es die Platzverhältnisse zu, kann die dem Anschlußrohrkörper 51 gegenüberliegende Rundung des Kugelringkörpers 53 erhalten bleiben.

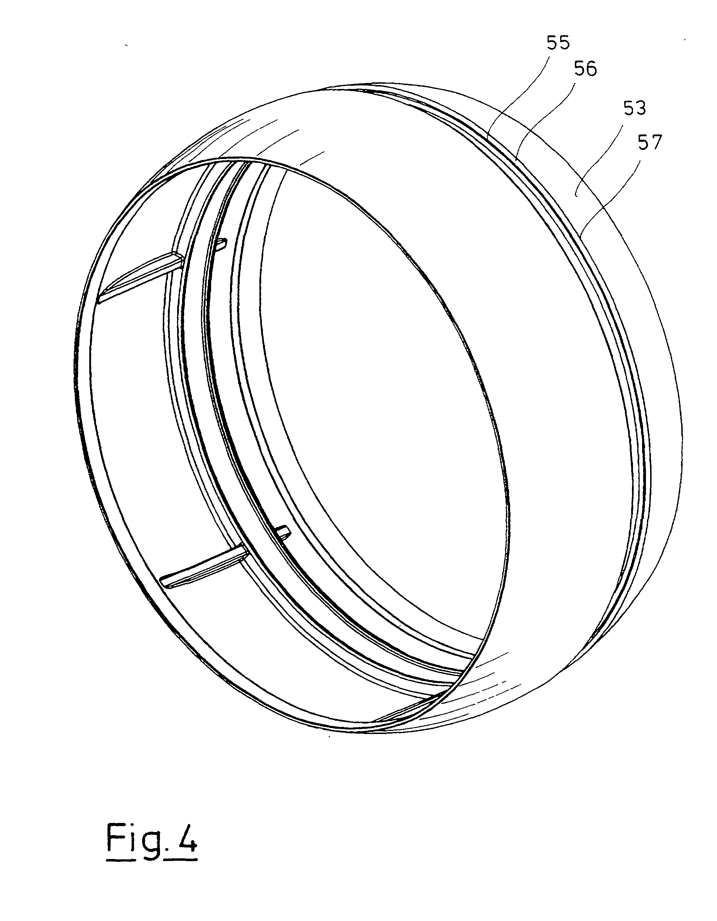

Auf dem Kugeläquator 57 (vgl. Fig. 4) ist eine Kopfdichtungshaltekammer 56 angeordnet, in die eine Kugelkopfringdichtung 55 eingelegt ist. Die Kugelkopfringdichtung 55 weist einen im wesentlichen runden Querschnitt auf.

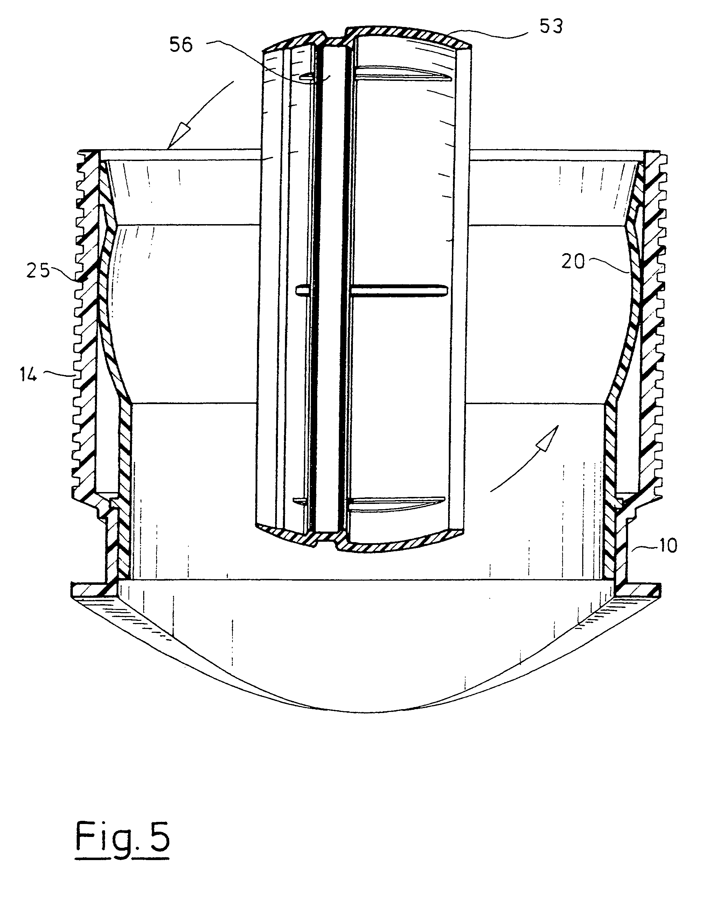

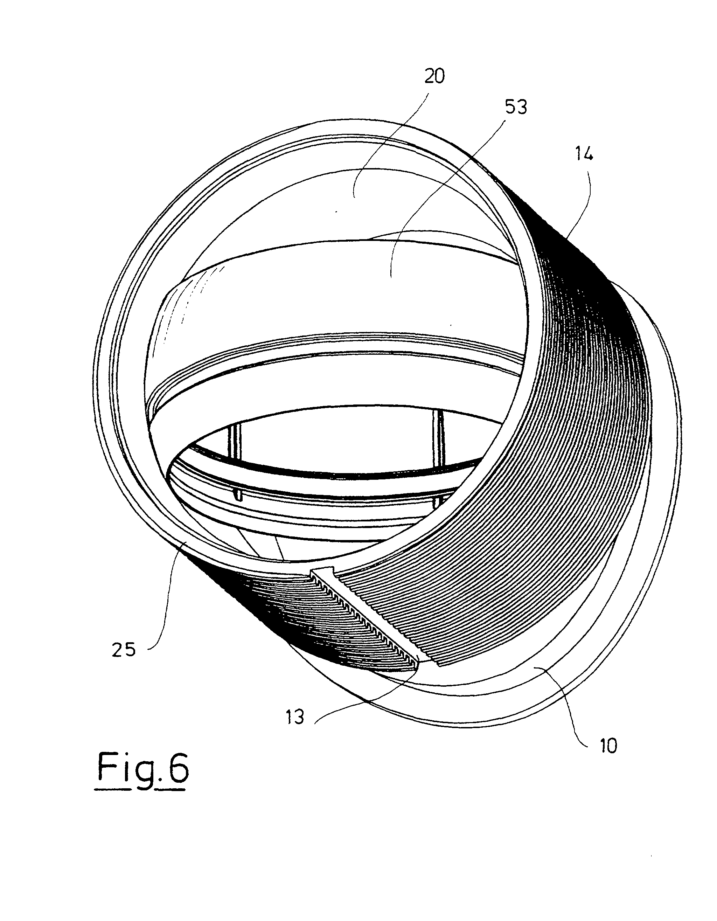

Ist der Kugelringkörper 53 in den Innen-Hohlkugelstumpfkörper 20 eingesetzt, wie Fig. 1, 2, 5 und 6 zeigen, entsteht ein Kugelgelenk 12, über das der Anschlußschwenkstutzen 50 im Anschlußstutzen 2 um einen Winkel α frei verschwenkbar ist.

Beim Verschwenken des Anschlußschwenkstutzens 50 in dem Anschlußstutzen 2 um den Winkel α, wie Fig. 1 insbesondere zeigt, ermöglicht es die umlaufende Anschlagkeilfläche 22, daß sich die Außenfläche des Anschlußrohrkörpers 51 glatt anlegen läßt, ohne dabei die Wandung des Außenrohrs 25 zu beschädigen.

Der Innen-Kugelstumpfkörper 20 und der Kugelringkörper 53 sind aus Kunststoff und/oder Metall gefertigt. Die Kugelkopfringdichtung 55 hingegen besteht aus einem Gummi, Kunststoff oder dergleichen. Die glatte Oberfläche des Innen-Hohlkegelstumpfkörpers 20 gestattet ein leichtes und vor allen Dingen flüssigkeitsdichtes Gleiten der Kugelkopfringdichtung 25 auf der Innenkugelfläche 21. Damit die Funktionsfähigkeit dieser Gleitdichtung erhalten bleibt, ist, wie insbesondere Fig. 3 zeigt, der Anschlußstutzen 2 mit dem Anschlußschwenkstutzen 50 durch eine Dichtungsmanschette 30 verbunden. Die Dichtungsmanschette 30 kann aus weichem Kunststoff, Leder und/oder Metall hergestellt sein. Sie kann zieharmonikaförmig gestaltet sein.

Das Verbinden des Kugelgelenk-Sattelstücks 100 mit dem Kanalrohr 1 und das anschließende Installieren des Hausanschlußrohrs, wie es sich aus dem dargestellten Ausführungsbeispiel ergibt, sei erläutert:

An einer beliebigen Stelle des Kanalrohrs 1 wird mit Hilfe eines Spezialwerkzeugs eine Öffnung 10 angebracht. Das Kanalrohr 1 besteht aus einem inneren Kunststoffrohr 1.2 und einem Betonrohr 1.1, das das Kunststoffrohr 1.2 umgibt, und stellt damit ein sogenanntes Inlinerrohr dar. Es ist durch eine Außenfläche, repräsentiert durch das rauhe Betonrohr 1.1, und eine Innenfläche, gebildet durch das glatte Kunststoffrohr 1.2, begrenzt.

Damit der Anschlußstutzen 2 des Kugelgelenk-Sattelstücks 100 in die Öffnung 11 eingeschoben werden kann, wird diese vorher gut gereinigt und mit einem Gleitmittel ausgekleidet. Danach wird der Anschlußstutzen 2 mit der Ringdichtung 6 in die Öffnung 11 eingeschoben. Die Dichtungslippe 7 mit dem daran angeformten Dichtungshilfsring 70 legt sich nach innen in den freien Raum vor den geraden Teil der Ringdichtung 6.

Ist der Anschlußstutzen 2 vollständig durch die Öffnung 11 durchgeschoben worden, wie insbesondere die Fig. 1 und 3 zeigen, löst sich die Dichtungslippe mit dem Dichtungshilfsring aus der Dichtungskammer 10. Durch ein Hochziehen des Anschlußstutzens 2 wird die Dichtungslippe umgestülpt, so daß sich, wie die Fig. 1 zeigt, diese in den Spalt zwischen dem unteren Schenkel und das Kunststoffrohr 1.2 gelangt. Gleichzeitig legt sich die pilzförmig ausgebildete Verdickung mit ihrer glatten Innenfläche abschließend über den Spalt, so daß dieser vollständig abgedichtet wird. Hierdurch wird eine haltbare und sichere Dichtung zur Innenfläche des Kanalrohrs 1 hergestellt.

Danach wird über den Anschlußstutzen 2 ein Auflagering geschoben, der sich paßgenau auf die gekrümmte Außenfläche des Betonrohr 1.1 auflegt, und auf das Außengewinde 14 ein Gewindering geschraubt (nicht dargestellt), der dann über den Auflagering den Anschlußstutzen 2 nach oben zieht und so die abdichtende Verbindung der Ringdichtung 6 stabilisiert. Mit Hilfe von besonderen Spannelementen kann der Gewindering korrekt festgezogen werden.

Anschließend wird von außen ein Polyurethanschaum 18 über eine Ausnehmung im Außenrohr 25 eingebracht. Dieser Polyurethanschaum befindet sich in einer separaten Spraydose. Der Polyurethanschaum 18 dringt in einen Raum 24 zwischen den Anschlußstutzen 2 und der Öffnung 11 ein. Er füllt den Raum 24, der durch den Spalt zwischen der Außenwandung des Anschlußrohrs 2 und der Innenfläche der Öffnung 1 entsteht, vollständig aus. Ist der Polyurethanschaum 18 ausgehärtet, bildet er ein Schaumstoffdichtungs- und -halterungselement 19 aus. Hierdurch verhält sich der Anschlußstutzen 2 so, als wäre er in die Öffnung 11 "einzementiert" worden. Darüber hinaus sorgt das Schaumstoffdichtungs- und -halterungselement 19 dafür, daß in die Poren der Innenwandung der Öffnung 11 keine Feuchtigkeit eindringt, die zu einer Zerstörung des Betons bei Frost führen kann.

Ist der Anschlußstutzen 2 des Kugelgelenk-Sattelstücks 100 so sachgerecht mit dem Kanalrohr 1 verbunden, wird der Anschlußschwenkstutzen 50 in Richtung des Hausanschlußrohrs geschwenkt und dieses abdichtend in den Anschlußrohrkörper 51 eingeführt. Bewegungen zwischen dem Hausanschlußrohr und dem Kanalrohr, die durch Temperaturschwankungen und -differenzen zwischen Hausanschlußrohr und Kanalrohr durch die unterschiedlichen Temperaturen der führenden Medien entstehen können, werden durch das frei bewegliche Kugelgelenk 12 abgefangen. Für die Montage ist dabei von Bedeutung, daß das Hausanschlußrohr in den unterschiedlichsten Winkeln α' auf das Kanalrohr 1 zukommen kann. Das Kugelgelenk 12 gleicht den Winkel bei der Montage aus und sichert das zentimetergenaue Anschließen des Hausanschlußrohrs an das Kanalrohr 1, das Voraussetzung für eine flüssigkeitsdichte Verbindung ist. Auch Bewegungen werden dauernd und sicher ausgeglichen.

## Patentansprüche

1. Vorrichtung zum flüssigkeitsdichten Verbinden eines Hausanschlußanrohrs mit einem Kanalrohr in einem stufenlos einzunehmenden Winkel, die besteht aus
- einem Hohlkugelstumpf-Anschlußkörper (2, 20), der über einer Öffnung (11) eines Kanalrohres (1) anzuordnen ist und
- einem Anschlußschwenkstutzen (50), der in dem Hohlkugelstumpf-Anschlußkörper (2, 20) winkelverstellbar angeordnet ist,
**dadurch gekennzeichnet,**
- **daß** der Hohlkugelstumpf-Anschlußkörper ein Sattelstück (2) aufweist, in dem ein Innen-Hohlkugelstumpfkörper (20) angeordnet ist, wobei das Sattelstück (2) wenigstens eine Dichtungshaltekammer (10) aufweist, in die eine Ringdichtung (6) einzulegen ist,
- **daß** der Anschlußschwenkstutzen (50) einen Kugelringkörper (53) mit wenigstens einer Kopfdichtungshaltekammer (56) aufweist, in die eine Kugelkopfringdichtung (55) einzulegen ist,
- **daß** der Kugelringkörper (53) in den Innen-Hohlkugelstumpfkörper (20) einzuschieben und die Kugelringdichtung (55) abdichtend auf dessen Innenkugelfläche (21) zu führen und ein Anschlußrohrkörper (51) in dem Kugelringkörper (53) anzuordnen ist und
- **daß** das Sattelstück (2) mit der Dichtungshaltekammer (10) voran in die in das Kanalrohr (1) eingebrachte Öffnung (11) zu schieben und die Ringdichtung (6) an einer Innenfläche des Kanalrohrs (1) festzulegen ist.

2. Vorrichtung nach Anspruch 1, **dadurch gekennzeichnet, daß** das Sattelstück (2) und der Anschlußstutzen (50) durch eine Dichtungsmanschette (30) wenigstens teilweise verbunden sind.

3. Vorrichtung nach Anspruch 1 oder 2, **dadurch gekennzeichnet, daß** die Kopfdichtungshaltekammer (56) auf einem Kugeläquator (57) des Kugelringkörpers (53) angeordnet ist.

4. Vorrichtung nach einem der Ansprüche 1 bis 3, **dadurch gekennzeichnet, daß** eine erste Kopfdichtungshaltekammer zu einer Seite und eine zweite Kopfdichtungshaltekammer zur anderen Seite des Kugeläquators (57) des Kugelringkörpers (57) angeordnet sind.

5. Vorrichtung nach einem der Ansprüche 1 bis 4, **dadurch gekennzeichnet, daß** die Kugelstumpfringdichtung (55) einen runden, ovalen, halbrunden und/oder halbovalen Querschnitt hat.

6. Vorrichtung nach einem der Ansprüche 1 bis 5, **dadurch gekennzeichnet, daß** um das Sattelstück (2) und auf einer Außenfläche des Kanalrohrs (1) ein Auflagering zu legen ist, über den mit einer Verspanneinrichtung die Ringdichtung (6) zu verspannen ist.

7. Vorrichtung nach einem der Ansprüche 1 bis 6, **dadurch gekennzeichnet, daß** an dem Sattelstück (2) ein Kunststoffschaum (18) in einen durch das Sattelstück (2) und die Öffnung (11) gebildeten Raum (24) so einzubringen ist, daß nach dessen Aushärtung in dem Raum (24) ein Schaumstoffdichtungs- und -halterungselement (19) angeordnet ist.

8. Vorrichtung nach einem der Ansprüche 1 bis 7, **dadurch gekennzeichnet, daß** der Kunststoffschaum ein Polyurethanschaum ist.

9. Vorrichtung nach einem der Ansprüche 1 bis 8, **dadurch gekennzeichnet, daß** der Innen-Hohlkugelstumpf- und der Kugelringkörper (20, 53) aus Kunststoff und/oder Metall bestehen.

## Claims

1. A device for liquid-tight connection between a connecting pipe from a house and a sewer pipe at a steplessly occupiable angle, the device comprising
- a hollow frusto-spherical connecting member (2, 20) for disposing over an opening (11) of a sewer pipe (1) and
- a swivelling connecting piece (50) disposed at an adjustable angle in the hollow frusto-spherical connecting member (2, 20),
**characterised in that**
- the hollow frusto-spherical connecting member comprises a saddle member (2) in which an inner hollow frusto-spherical member (20) is inserted, wherein the saddle member (2) comprises at least one seal-holding chamber (10) into which an annular seal (6) is inserted,
- the swivelling connecting piece (50) comprises a spherical ring member (50) with at least one head-seal holding chamber (56) into which a spherical head annular seal (55) is inserted,
- the spherical ring member (53) is inserted into the inner hollow frusto-spherical member (20) and the spherical ring seal (55) is guided in sealing-tight manner on the inner spherical surface (21) of the member (20) and a connecting tubular member (51) is placed in the spherical ring member (53), and
- the saddle member (2) with the seal-holding chamber (10) in front is inserted into the opening (11) formed in the sewer pipe (1) and the annular seal (6) is secured on an inner surface of the sewer pipe (1).

2. A device according to claim 1, **characterised in that** the saddle member (2) and the connecting piece (50) are at least partly connected by a sealing sleeve (30).

3. A device according to claim 1 or 2, **characterised in that** the head-seal holding chamber (56) is disposed on an equator (57) of the spherical ring member (53).

4. A device according to any of claims 1 to 3, **characterised in that** a first head-seal holding chamber is disposed on one side and a second head-seal holding chamber is disposed on the other side of the equator (57) of the spherical ring member (57).

5. A device according to any of claims 1 to 4, **characterised in that** the frusto-spherical annular seal (55) has a round, oval, semicircular and/or semi-oval cross-section.

6. A device according to any of claims 1 to 5, **characterised in that** a bearing ring is placed round the saddle member (2) and on an outer surface of the sewer pipe (1) and is used to clamp the annular seal (6) via a clamping means.

7. A device according to any of claims 1 to 6, **characterised in that** a plastic foam (18) is inserted at the saddle member (2) into a space (24) formed by the saddle member (2) and the opening (11), so that after the foam hardens a foam material sealing and holding element (19) is disposed in the space (24).

8. A device according to any of claims 1 to 7, **characterised in that** the plastic foam is a polyurethane foam.

9. A device according to any of claims 1 to 8, **characterised in that** the inner hollow frusto-spherical member (20) and the spherical ring member (53) are made of plastic and/or metal.

## Revendications

1. Dispositif pour relier de manière étanche aux liquides un tuyau de raccordement domestique à une canalisation suivant un angle continu, lequel dispositif comprend
- un corps de raccordement (2, 20) en forme de sphère creuse tronquée qui doit être disposé sur une ouverture (11) dune canalisation (1), et
- une tubulure pivotante de raccordement (50) qui est disposée dans le corps de raccordement (2, 20) en forme de sphère creuse tronquée selon un angle réglable,
**caractérisé en ce**
- **que** le corps de raccordement en forme de sphère creuse tronquée comporte une selle (2) dans laquelle est disposé un corps intérieur (20) en forme de sphère creuse tronquée, la selle (2) présentant au moins une chambre de maintien de joint (10) dans laquelle doit être inséré un joint annulaire (6),
- **que** la tubulure pivotante de raccordement (50) présente un corps annulaire sphérique (53) avec au moins une chambre de maintien de joint de tête (56) dans laquelle doit être inséré un joint annulaire de tête de sphère (55),
- **que** le corps annulaire sphérique (53) doit être introduit dans le corps intérieur (20) en forme de sphère creuse tronquée et le joint annulaire de sphère (55) doit être guidé avec étanchéité sur la surface sphérique intérieure (21) dudit élément et un corps tubulaire de raccordement (51) doit être disposé dans le corps annulaire sphérique (53), et
- **que** la selle (2) doit, avec la chambre de maintien de joint (10) en avant, être introduite dans l'ouverture (11) aménagée dans la canalisation (1) et le joint annulaire (6) doit être fixé sur une surface intérieure de la canalisation (1).

2. Dispositif selon la revendication 1, **caractérisé en ce que** la selle (2) et la tubulure de raccordement (50) sont reliés au moins partiellement par une manchette d'étanchéité (30).

3. Dispositif selon la revendication 1 ou 2, **caractérisé en ce que** la chambre de maintien de joint de tête (56) est disposée sur un équateur (57) du corps annulaire sphérique (53).

4. Dispositif selon l'une des revendications 1 à 3, **caractérisé en ce qu'**une première chambre de maintien de joint de tête est disposée d'un côté et une deuxième chambre de maintien de joint de tête est disposée de l'autre côté de l'équateur (57) du corps annulaire sphérique (53).

5. Dispositif selon l'une des revendications 1 à 4, **caractérisé en ce que** le joint annulaire de tête de sphère (55) a une section ronde, ovale, semi-circulaire et/ou semi-ovale.

6. Dispositif selon l'une des revendications 1 à 5, **caractérisé en ce qu'**une bague d'appui doit être placée autour de la selle (2) et sur une surface extérieure de la canalisation (1), bague d'appui par l'intermédiaire de laquelle le joint annulaire (6) doit être serré à l'aide d'un dispositif de serrage.

7. Dispositif selon l'une des revendications 1 à 6, **caractérisé en ce qu'**une mousse synthétique (18) doit être mise en place sur la selle (2), dans une chambre (24) formée par la selle (2) et l'ouverture (11) de telle manière qu'après son durcissement dans la chambre (24) elle forme un élément (19) de support et d'étanchéité en mousse.

8. Dispositif selon l'une des revendications 1 à 7, **caractérisé en ce que** la mousse synthétique est une mousse de polyuréthane.

9. Dispositif selon l'une des revendications 1 à 8, **caractérisé en ce que** le corps intérieur (20) en forme de sphère creuse tronquée et le corps annulaire sphérique (53) sont en matière plastique et/ou en métal.
